# EUROPEAN PATENT APPLICATION

(11) **EP 3 518 093 A1**
(43) Date of publication of application: **31.07.2019**
(21) Application number: 18153755.6
(22) Date of filing: 26.01.2018
(51) Int. Cl.: G06F 3/12, B33Y 50/00

(54) **METHOD OF DETERMINING SETTINGS FOR A MULTI-LAYER PRINT JOB**

(71) Applicant: OCE Holding B.V., 5914 CA Venlo (NL)
(72) Inventor: BUNAS, Eduart, 5914 CA Venlo (NL); DUNGA, Claudiu A., 5914 CA Venlo (NL); IACOB, Violeta, 5914 CA Venlo (NL); NISTOR, Andrei, 5914 CA Venlo (NL); VAJNA, Andrei, 5914 CA Venlo (NL); VULPE, Radu, 5914 CA Venlo (NL)
(74) Representative: OCE IP Department

(57) **Abstract**

A method of deciding on settings (30) for a print job (28) wherein a print product is formed by printing several superposed layers of marking material, the method comprising the steps of:
(a) providing and recording settings (30) for a number of test samples (22) for the print job;
(b) performing or simulating a process of printing the test samples;
(c) selecting one of the test samples; and
(d) using the recorded settings for the selected sample for printing the product,
characterized in that the step (a) comprises recording and optionally editing the settings (30) in electronic form, and, for each test sample (22), generating an electronic image (40) of each layer on the basis of the recorded settings (30), and rendering the electronic images (40) of all layers on a display (36).

## Description

The invention relates to a method of deciding on settings for a print job wherein a print product is formed by printing several superposed layers of marking material, the method comprising the steps of:
(a) providing and recording settings for a number of test samples for the print job;
(b) performing or simulating a process of printing the test samples;
(c) selecting one of the test samples; and
(d) using the recorded settings for the selected sample for printing the product.

Printing techniques, in particular ink jet printing techniques are increasingly used for forming three-dimensional or relief-like objects by printing several layers of ink or other marking material superposed one upon the other. These techniques may for example be used for forming surface structures that resemble a tiling, a brick wall, an oil painting or a stained glass object, for example.

The settings that have to be made for such a print job may relate to the layer structure of the print product and may for example specify the number of layers, attributes or properties of the different layers, the sequence of the layers, and the like. Attributes or properties of the layers may comprise for example the layer thickness or optical density, color and the like, either on a per-pixel basis or for the layer as a whole, the selection of pixel screens for different color components in color layers, the physical properties of the inks being used, e.g. transparency or opacity of the inks, curing times and curing intensities in case of radiation-curing inks, and the like.

Since the specific impact that any changes in the settings will have on the visual appearance of the print product is difficult to predict, it has been common practice to use a try-and-error approach, i.e. to print a plurality of test samples with different settings and then to use the settings of the test sample that comes closest to the desired result.

In order to be able to keep track of the assignment of the different settings to the test samples, the setting information should be stored on a suitable storage medium. Conveniently, the setting information is printed in text form directly on a margin of a substrate sheet on which the sample is printed. In many cases, the setting information is required to be considerably complex and detailed, so that much space on the substrate sheets is required for the setting information, so that the consumption of substrate material is increased significantly.

Further, since the media sheets need to be over-sized in order to accommodate the setting information, the number of media sheets that can be placed on a print surface of a printer, e.g. a flatbed printer, for simultaneous printing of test samples is limited due to the size of the substrate sheets.

It is an object of the invention to provide a method that permits to decide on the print job settings more efficiently.

In order to achieve this object, in the method according to the invention, the step (a) comprises recording and optionally editing the settings in electronic form, and, for each test sample, generating an electronic image of each layer on the basis of the recorded settings, and rendering the electronic images of all layers on a display.

The fact that the settings, i.e. the setting information, is recorded in electronic form greatly facilitates the entry of the setting information into the printer in step (d). Further, the electronic setting data provide a basis for creating electronic images of the individual layers of the test sample. It turns out that rendering electronic images of these layers of the test samples is extremely useful, not only in identifying, at a glance, which settings apply to which sample, but also for anticipating the effect that the different settings will have on the visual appearance of the final product.

Since the settings, recorded in electronic form, can readily be edited, it becomes also possible to adjust the settings in an interactive process and thereby to reduce in many cases the number of test samples that need to be printed. In the extreme, the rendering of the electronic images of all the layers of a test sample may be equivalent to a simulation of the print process and the visual appearance of the test sample, so that the selection of the best test sample in step (c) can be made already on the basis of the rendered images, without having to actually print the test samples at all.

More specific optional features of the invention are indicated in the dependent claims.

The images of the layers of a given test sample may be rendered in an exploded view, showing not only the appearance of each layer but also the sequence in which the layers are arranged in the test sample and in the final print product, respectively.

In another option, the images may be rendered in a state in which the layers are directly superposed one upon the other just as in the final print product. In that case, the visual appearance of the print product or test sample, respectively, may be calculated on the basis of the known spectral absorptivities and transmissivities of the various layers. In that case, it is also possible to simulate the visual appearance of the product when viewed from different viewing positions (viewing angles) and/or under different lighting conditions.

The display that is used for rendering the images may be any known type of display such as a monitor screen or a touch screen which may also serve as a means for editing the settings. In an attractive embodiment, the display forms part of an AR-device (Augmented Reality device) e.g. AR goggles or an AR headset. In that case, input means for selecting the samples and/or for editing the settings may comprise motion capturing facilities of the AR device capable of capturing gestures of the user and interpreting them as editing or selection commands.

Embodiment examples will now be described in conjunction with the drawings, wherein:
- Fig. 1: is a schematic view of a printing system including equipment for carrying out the method according to the invention;
- Fig. 2: is a view analogous to Fig. 1, illustrating a different display mode of the system;
- Fig. 3: illustrates layer structures of three examples of test samples for a print product; and
- Fig. 4: is a flow diagram illustrating essential steps of a method according to the invention.

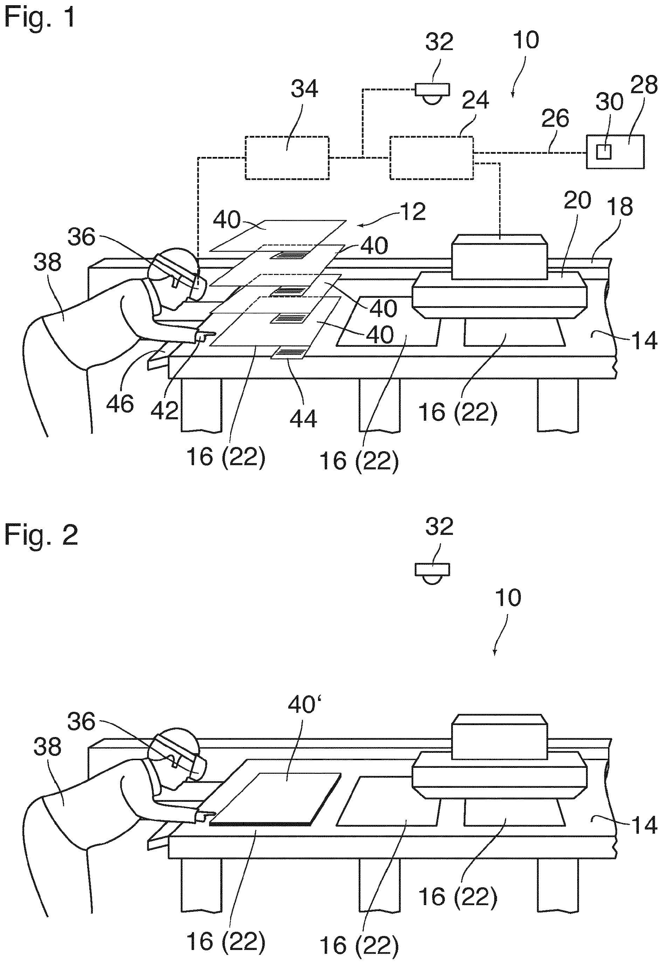

Fig. 1 illustrates essential parts of a printing system comprising a flatbed ink jet printer 10 and a AR (Augmented Reality) system 12.

The printer 10 has a print surface 14 which may be constituted by a suction table as is well known in the art and on which a number of substrate sheets 16 have been placed. A gantry 18 is arranged to move across the print surface 14 in a sub-scanning direction (forward and backward in Fig. 1) and carries an ink jet print head 20 that is movable along the gantry 18 in a main scanning (right and left) direction. Thus, by scanning the print surface 14 several times with the print head 20, it is possible to apply multiple superposed layers of ink on the substrate sheet 16, thereby transforming the substrate sheets into test sample 22 of multi-layer print products. The substrate sheets 16 may form part of the test samples 22 and print products or, alternatively, may be peeled off, so that the test samples 22 and print products are formed only by the layers of cured ink.

A print controller 24 is adapted to receive, e.g. via a data link 26, print jobs 28 that include print data and job settings 30 for printing the test substrates 22. The print controller 24 is configured to control the operations of the printer 10 in accordance with the print data and settings.

A camera 32 is arranged above the print surface 14 for capturing, among others, images of the print surface 14 with the print substrates 16 disposed thereon. The image information is provided to the print controller 24 which derives the positions of the individual substrate sheets 16 from the image information and controls the print head 20 such that the layers of ink are positioned correctly on the substrate sheets.

The AR system 12 comprises an AR controller 34 configured to receive data that represent the settings 30 from the print controller 24. The AR system further includes a display 36 which, in this example, takes the form of goggles or a headset worn by a user 38. The display 36 is controlled by the AR controller 34 so as to present to the user 38 a three-dimensional image that is superposed on the image of the real world as seen by the user.

The AR controller 34 is configured to generate, on the basis of the settings 30 provided by the print controller, electronic images of the individual ink layers to be formed on the print substrates 16, and to render these images on the display 36.

In this example, the AR controller 34 receives image data from the camera 32 which captures images not only of the print surface 14 but also of the user 38 wearing the display 36. The AR controller 34 is configured to calculate, on the basis of these image data, the three-dimensional posture of the display 36 in space and, thereby, the viewing position and viewing direction of the user 38. On the basis of this information, the images rendered on the display 36 are constructed such that they confer to the user 38 the illusion of seeing three-dimensional objects which have a consistent spatial relationship to the real-world objects such as the print surface 14.

In the example shown, the image rendered on the display 36 is an exploded view of images 40 that hover above the leftmost (in Fig. 1) substrate sheet 16 on the print surface 14, with vertical spacings between the images 40, so that the user 38 can perceive the entire surfaces of all the images 40 simultaneously. The images 40 represent four layers of the test sample 22 to be printed on the substrate sheet 16. Thus, the user 38 can preview, at a glance, the entire layer structure of the test sample 22 to be formed.

In the example described here, the camera 32 captures also the upper part of the body of the user 38, including his or her arms and hands 42, and the AR controller 34 is configured to recognize these body parts and to interpret movements or gestures of the user 38 as operating commands. For example, when the user points with a finger on one of the substrate sheets 16, the AR controller 34 interprets this as a command to show the images 40 of the layers to be formed on that particular substrate sheet in accordance with the settings 30. Similarly, by pointing on another substrate sheet 16, the user can cause the AR system to display the layer structure of the test sample 22 to be formed on that other substrate.

In the example shown, the settings 30 for each of the layers represented by the images 40 are also shown on the display 36 in the form of text information written on a tab 44 attached to the image 40 of the respective layer. Thus, the user 38 can be informed of all relevant details of the settings.

The AR system 12 may also form input means for editing the settings 30. For example, by pointing with his finger on one of the tabs 44, the user may cause the system to display an enlarged view of that tab and the text information written thereon. Then, by pointing on particular text items on that tab, the user may call-up a related menu for selecting alternative settings. Then, by making pre-defined gestures, the user may command to replace the old settings by the new ones and to store them on the print controller 24. Of course, the effect of the changes will immediately be visible in the related image 40 on the display.

As an alternative, the user may utilize a control panel with a touch screen 46 for editing the settings.

Fig. 2 illustrates another display option that may be implemented in the AR system 12. In that option, the image rendered on the display 36 shows a combined image 40' of the layers of the selected test sample 22 directly superposed one upon the other, i.e. in the same layer configuration as in the test sample to be printed. Rather than showing the image content of the individual layers, this display option will show the expected visual impression of the entire test sample to be printed. The combined image 40' may be calculated on the basis of the image contents, the spectral transmissivity and spectral absorptivity of each layer in the test sample by simulating the propagation of light rays through the layers of the test sample.

Thus, the combined image 40' shown in Fig. 2 can be considered as the result of a simulation of the print process to be performed, permitting to directly predict the visual appearance of the print product. Then, subject to a sufficient accuracy of the simulation, the test samples 22 may possibly need not be printed at all. Instead, the user may simply inspect the simulation results by calling up the combined images 40' for all test samples and may then decide to take the settings which give the best result for the actual print process for forming the print product or a large number of identical print products. Of course, the user may also choose to attempt to improve the result even further by modifying the settings.

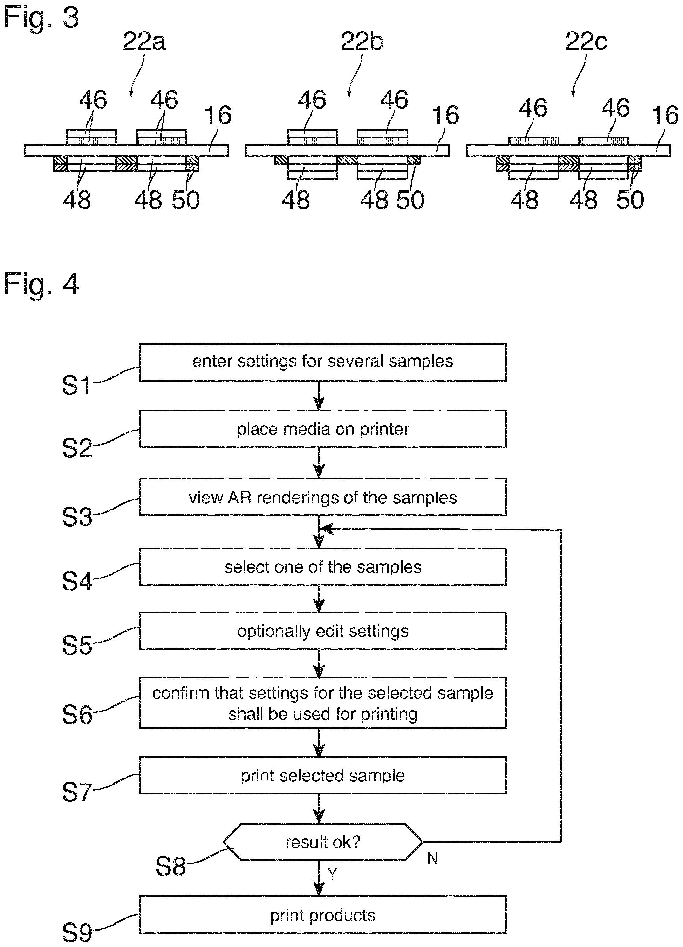

Fig. 3 shows sectional view (with the height dimension being exaggerated) of three test samples 22a, 22b, 22c of a print product which, in this example, is an imitation of a stained glass object. More particularly, the print product is obtained by printing several layers 46 of colored ink (e.g. in the basic colors C, M, Y, K), layers 48 of white ink and layers 50 of non-transparent dark ink on both sides of a transparent print substrate 16. The dark layers 50 emulate the lead that separates and frames individual transparent fields of colored glass in a real stained glass object and are therefore designated as "lead" layers. The white layers 48 serve as background for the colored layers 46 and provide for an appropriate brilliancy of the colors. The white layers 48 and the colored layers 46 and even the "lead" layers 50 may be translucent to a certain extent, so as to create the impression of stained glass.

In the example shown, the colored layers 46 are printed on a front side of each substrate 16, and the white layers 48 and the "lead" layers 50 are printed on a back side of the substrate. In the example shown, the "lead" layers 50 have voids which are filled by the white layers 48 and the colored layers 46, which gives the impression that the "lead" forms frames that separate the fields of colored glass. In a modified embodiment, however, at least some of the layers 46, 48 and 50 may be continuous.

In the test sample 22a, two colored layers 46 are provided on the front side, and two white layers 48 and two "lead" layers 50 are formed on the back side. The test sample 22b has a modified layer structure with only one "lead" layer 50 but three white layers 48 on the back side; and the test sample 22b has yet another layer structure with only one colored layer 46 on the front side, and three white layers 48 and two "lead" layers 50 on the back side.

In the embodiment shown in Fig. 3, the numbers of the colored layers 46, white layers 48 and "lead" layers 50 as well as the sequences in which these layers are applied on the front side and the back side of the substrate 16 form part of the settings 30 and may actually be the only setting parameters that distinguish the test samples.

When an image of the layer structure is rendered in the display mode shown in Fig. 1, the print substrates 16 will be shown lifted off from the print surface 14, and the images of the white and colored layers will be shown in the exploded view below the images of the substrates 16.

When the test samples 22a - 22c are actually printed, it will be understood that a two-step print procedure is applied, wherein, for example, the colored layers 46 are printed in a first step and then the substrate sheets are flipped, so that the layers 48 and 50 may be printed on the back sides which are then the top sides of the substrate sheets.

Again, the visual impressions obtained by the different layer structures may be simulated in a display mode analogous to the mode shown in Fig. 2, so that actually printing the test samples may possibly be dispensed with.

The essential steps of an example of a method according to the invention are summarized in a flow diagram shown in Fig. 4.

In step S1, the (initial) settings for a desired number of test samples are entered into the print controller 24. These settings may already form part of the print job 28, as shown in Fig. 1, or may be entered by the user via the touch screen 46, for example.

In step S2, the media sheets 16 are placed on the print surface 14 of the printer 10.

The images 40 and/or 40' of the layers of the test samples to be printed are rendered on the display 36 in step S3. In this step, the user may toggle between the alternative display modes shown in Figs. 1 and 2.

In step S4, the user evaluates the rendered images and selects the one of the test samples 22 which appears to come closest to the desired appearance of the final print product.

Optionally, the settings for the selected sample may be edited in step S5, and the result will be observed in the rendered images.

When the user believes that the settings for the selected sample may lead to an acceptable result, he or she makes a gesture or enters a command, in step S6, confirming that the settings for the selected sample shall be used for printing the test sample or possibly even a first copy of the final product. These settings will then be stored as the "valid" settings in the print controller 24.

Then, the printer 10 is started in step S7 and the selected test sample (or product) is printed.

In step S8, it is checked whether or not the test sample or product printed in step S7 is acceptable. If it is (Y), the printed test sample can already be used as a first copy of the final product, and further copies of the same product may be printed in step S9.

If it is found in step S8 that the result is not yet acceptable (N), the process loops back to step S4 and the user selects again one of the samples. These sample may be the same as the sample that had been selected before (if the user wants to edit the settings), or it may be a different sample which the user considers to be more promising.

The loop comprising the steps S4-S8 is then repeated as often as required until a satisfactory result has been obtained.

The embodiment of the method as illustrated in Fig. 4 aims as reducing the number of test samples to be printed as far as possible. If the focus is more on obtaining an acceptable result in a shortest possible time, it may be advantageous to use another approach in which a plurality of samples are selected in step S4, these samples are printed simultaneously, and then the test sample that comes closest to the desired result is selected for further editing and refining of the settings in the next iteration of step S4.

## Claims

1. A method of deciding on settings (30) for a print job (28) wherein a print product is formed by printing several superposed layers (46, 48, 50) of marking material, the method comprising the steps of:
(a) providing and recording settings (30) for a number of test samples (22; 22a, 22b,22c) for the print job;
(b) performing or simulating a process of printing the test samples;
(c) selecting one of the test samples; and
(d) using the recorded settings for the selected sample for printing the product,
**characterized in that** the step (a) comprises recording and optionally editing the settings (30) in electronic form, and, for each test sample (22; 22a, 22c), generating an electronic image (40) of each layer (46, 48, 50) on the basis of the recorded settings (30), and rendering the electronic images (40) of all layers on a display (36).

2. The method according to claim 1, wherein the images (40) are rendered in the form of an exploded view showing the images (40) of the different layers with vertical spacings therebetween.

3. The method according to claim 1, wherein the images (40) of the layers are rendered in the form of a combined image (40') in which the layers are shown directly superposed one upon the other, the combined image (40') being calculated on the basis of transmission and absorption properties of the different layers as determined by the settings.

4. The method according to claim 3, wherein the combined image (40') is used as a result of a simulation of a process of printing the test sample in step (b).

5. The method according to any of the preceding claims, wherein an AR system (12) is used for rendering the images.

6. The method according to claim 5, wherein an AR headset is used as the display (36).

7. The method according to claim 6, wherein a camera (32) is used for capturing an image of print substrates (16), on which the test samples (22) are to be printed, as placed on a print surface (14) of a printer (10), and for capturing also an image of the AR headset constituting the display (36), for constructing the images (40) to be displayed on the display (36) as a three-dimensional image with a consistent spatial relationship relative to the print surface (14).

8. The method according to any of the preceding claims, comprising a step of editing the settings (30).

9. The method according to claim 8, wherein a capability of the AR system (12) to recognize and interpret gestures and body movements of a user as editing commands is used as input means for selecting among the test samples (22) and/or for editing the settings.

10. A printing system comprising a printer (10) and an AR system (12) configured to render the electronic images (40) in a method according to any of the claims 1 to 9.
